Europäisches Patentamt

European Patent Office

Office européen des brevets

(19)

(11) EP 1 580 734 A2

(12) **EUROPEAN PATENT APPLICATION**

(43) Date of publication:
28.09.2005 Bulletin 2005/39

(51) Int Cl.⁷: **G11B 7/0045**

(21) Application number: 05251532.7

(22) Date of filing: 15.03.2005

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **15.03.2004 JP 2004072544**

(71) Applicant: **MATSUSHITA ELECTRIC INDUSTRIAL
CO., LTD.**
**Kadoma-shi, Osaka 571-8501 (JP)**

(72) Inventors:
• **Narumi, Kenji**
  **Suita-shi Osaka 565-0824 (JP)**
• **Hosaka, Tomiharu**
  **Yawata-shi Kyoto 614-8031 (JP)**

(74) Representative: **Jeffrey, Philip Michael**
**Frank B. Dehn & Co.**
**179 Queen Victoria Street**
**London EC4V 4EL (GB)**

(54) **Optical information recording method, optical information recording apparatus, and optical information recording medium**

(57)     A recording pulse for driving a laser is formed so that a length of a recorded mark on a recording medium corresponds to a recording code length of data; the recording pulse is formed as a recording pulse train having pulse heights corresponding to a plurality of power levels including a recording power ($P_w$) and an erasure power ($P_e$); the recording pulse train is composed of a plurality of pulses including a multi-pulse (302, 602) and a trailing pulse (303, 603); and the recording medium at a plurality kinds of linear velocities is irradiated with laser light based on the recording pulse to form the mark. When linear velocities v1 and v2 are in a relationship that v1 < v2, the following formulas are satisfied: $(T_{L1}/T_{w1}) < (T_{L2}/T_{w2})$, and $((T_{M2}/T_{w2})/(T_{M1}/T_{w1})) < ((T_{L2}/T_{w2})/(T_{L1}/T_{w1}))$, where $T_{w1}$, $T_{w2}$ : channel clock periods at the linear velocities v1, v2, $T_{L1}$, $T_{L2}$ : trailing pulse widths at the linear velocities v1, v2, $T_{M1}$, $T_{M2}$ : multi-pulse widths at the linear velocities v1, v2.

FIG. 3

EP 1 580 734 A2

**Description**

The present invention relates to an optical information recording method and an optical information recording apparatus with respect to a recording medium used for optically recording/reproducing data. In particular, the present invention relates to the improvement of a recording pulse waveform with respect to a medium used for recording data at a plurality of different linear velocities.

Recently, as a medium for optically recording data, an optical disk, an optical card, an optical tape, and the like have been proposed and developed. Among them, an optical disk is receiving attention as a medium capable of recording/reproducing data with a large capacity and a high density.

For example, in the case of a phase-change type optical disk, data is recorded/reproduced with laser light focused by an optical head as described below. In recording, a recording film of the optical disk is irradiated with laser light of a power level represented by $P_w$ that is stronger than a reproducing power (such power level is referred to as a recording power). When the temperature of the recording film exceeds a melting point as a result of the irradiation with laser light, a melted portion is cooled rapidly along with the passage of laser light, whereby a mark in an amorphous state is formed. Furthermore, when the recording film is irradiated with laser light of a power level represented by $P_e$ that is such a degree as to increase the temperature of the recording film to a crystallization temperature or higher and a melting point or lower (such power level is referred to as an erasure power), the irradiated portion of the recording film assumes a crystalline state.

Thus, a recorded pattern composed of a mark that is an amorphous region corresponding to a data signal and a space that is a crystalline region is formed on the medium. Then, data is reproduced using the difference in reflectance between the crystalline region and the amorphous region.

As described above, in order to form a mark on the medium, it is necessary to modulate the power level of laser light at least between the erasure power and the recording power to allow light to be emitted. The pulse waveform used in the modulation operation is referred to as a recording pulse. A number of recording methods for forming one mark with a plurality of recording pulses already have been known. The plurality of recording pulses are referred to as a recording pulse train.

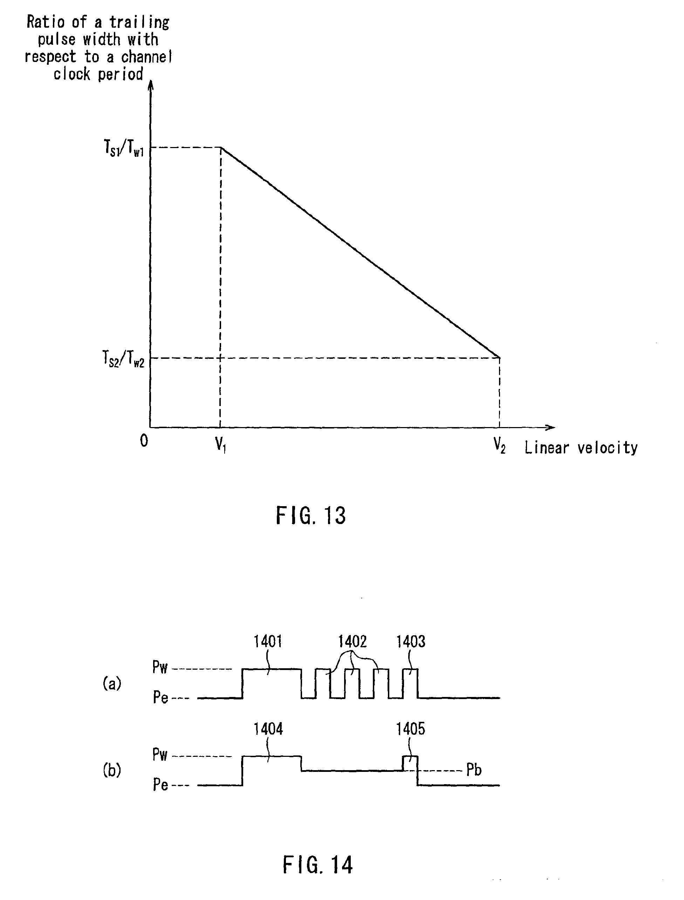

An example of the recording pulse train is represented by (a) of FIG. 14. A pulse in a leading portion of the recording pulse train is referred to as a leading pulse 1401. Apulse in a trailing portion of the recording pulse train is referred to as a trailing pulse 1403. A pulse between the leading pulse 1401 and the trailing pulse 1403 is referred to as a multi-pulse 1402. The number of recording pulses constituting the recording pulse train is varied depending upon a recording code length (i.e., a ratio of the length of a recording code with respect to a channel dock period $T_w$), and the number of recording pulses may be one in the shortest code length.

A method of forming a mark, using a single recording pulse with the pulse level varied between the leading portion and the trailing portion, in place of a recording pulse train, also has been known, as represented by (b) of FIG. 14. A pulse 1404 in the leading portion and a pulse 1405 in the trailing portion also are referred to as a leading pulse and a trailing pulse, respectively.

Currently, in an optical information recording medium such as a DVD, a constant linear velocity (CLV) recording system mainly is used. This is a system for recording data over the entire surface of a medium under the condition that the linear velocity, the transfer rate, and the linear density are set to be substantially the same. In this case, the rotation velocity of the medium is varied depending upon the recording/reproducing position (i.e., the radius position) on the medium.

In contrast, a constant angular velocity (CAV) recording system in which the rotation velocity and the linear density of a medium are set to be substantially constant over the entire surface of the medium also is known. According to the CAV recording system, it is not necessary to control a spindle motor for rotating the medium at different rotation velocities, so that there is an advantage that the spindle motor and the control circuit thereof can be produced at a low cost. Furthermore, it is not necessary to wait for a recording/reproducing operation until a predetermined rotation velocity is obtained after a seek operation at the recording/reproducing position, so that the access speed with respect to the medium can be shortened.

On the other hand, according to the above-mentioned system, the linear velocity and the transfer rate are varied depending upon the recording/reproducing position on the medium. Thus, the irradiation condition of laser light and heating/cooling conditions of the medium are varied depending upon the recording/reproducing position.

As a recording system for improving signal quality by adjusting a recording pulse waveform in the case of recording data at a plurality of different linear velocities, various methods have been known. As an example, JP 2001-222819 A (pp. 3-5, FIG. 2) discloses a method of forming a mark with a recording pulse train, and increasing the duty ratios of the multi-pulse and the trailing pulse (that is, increasing the ratio of a pulse width with respect to a channel clock period) in accordance with an increase in the recording linear velocity. Furthermore, for example, JP 2001-76341 A (page 5, FIG. 2) discloses a method of increasing the duty ratios of the leading pulse and the multi-pulse in accordance with an increase in the recording linear velocity. Furthermore, for example, JP 2001-118245 A (pp. 5-7, FIG. 1) discloses a method of forming a mark with a recording pulse train, and increasing the duty ratio of a leading pulse in accordance with an increase in the recording linear velocity.

However, according to the above-mentioned conventional recording/reproducing method, in the case where the range of a linear velocity to be varied is large, data cannot be recorded stably with satisfactory signal quality. Hereinafter, this problem will be described.

In the case of recording data with a recording pulse train at a high linear velocity and a high transfer rate, it is necessary to shorten a channel dock period that is to be the base on which a recording pulse train is generated. However, there are a constant rising time and falling time in modulation and light-emission operations of laser.

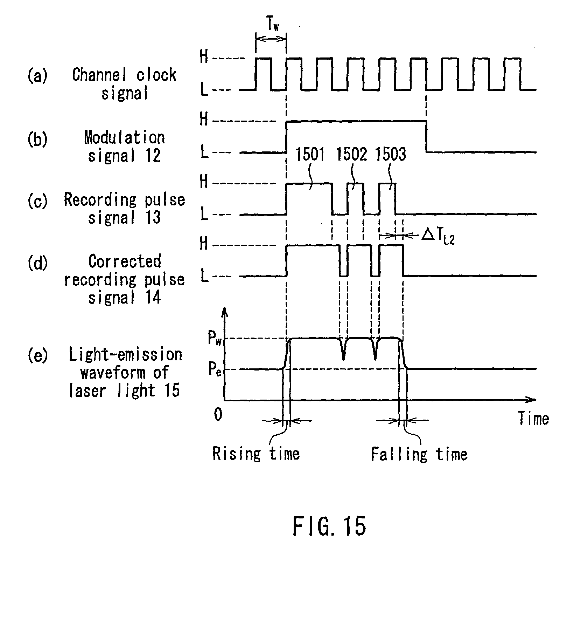

Therefore, according to the method of increasing the duty ratios of the multi-pulse and the trailing pulse in accordance with an increase in the linear velocity, inconvenience is caused as shown in a waveform diagram in FIG. 15 in the case of a high linear velocity. That is, in recording at a high linear velocity, a period $T_w$ of a channel clock signal in (a) decreases. Based on this channel dock signal, a recording pulse signal in (c) composed of a leading pulse 1501, a multi-pulse 1502, and a trailing pulse 1503 are generated so as to correspond to a modulation signal in (b). The duty ratio between a multi-pulse 1502 and a trailing pulse 1503 is varied as represented by (d) with respect to a recording pulse signal in (c). Then, the width of the interval between respective pulses may be smaller than the sum of the rising time and the falling time of laser Consequently, as represented by (e), the light-emission pulse cannot be modulated between the predetermined recording power $P_w$ and the predetermined erasure power $P_e$.

Furthermore, when a laser light based on a multi-pulse is irradiates the medium, a recording pulse is present also before and after the multi-pulse. Therefore, compared with the recording of the leading pulse and the trailing pulse, thermal energy is likely to be concentrated during recording of the multi-pulse. Consequently, even in the case where the laser power can be modulated between the recording power $P_w$ and the erasure power $P_e$ using a laser with high performance, when the duty ratio of the multi-pulse is high, a mark center portion corresponding to the portion irradiated by the multi-pulse comes to have a width larger than those of the portions before and after the mark center portion, whereby a phenomenon of distortion in the shape of a mark occurs.

When the duty ratios of the multi-pulse and the trailing pulse are limited so as not to be too high at a high linear velocity in order to avoid the above-mentioned problem, another problem arises as follows. In recording at a high linear velocity, the relative velocity between the laser spot and the medium increases. In this case, when the duty ratio of the trailing pulse is low, in recording at a high linear velocity, the cooling speed after melting with laser irradiation increases excessively in a portion where a trailing portion of a mark is formed (i.e., the power level of a laser is shifted from the recording power to the erasure power). Consequently, an amorphous region of a mark back portion is formed too stably, so that insufficient erasure occurs when the mark is overwritten, resulting in a decrease in the quality of reproduced signal.

On the other hand, when the duty ratio of the leading pulse is increased in accordance with an increase in the recording linear velocity, the duty ratio of the leading pulse becomes smallest when data is recorded at the lowest linear velocity, and consequently, the length of the entire pulse train becomes shortest. On the other hand, in recording at a low linear velocity, the relative velocity between the laser spot and the medium becomes low, so that the cooling speed after melting by laser irradiation becomes low. Consequently, recrystallization proceeds from the periphery of the melted portion, so that the width of a mark front portion becomes small, resulting in a distortion of the mark shape that degrades the quality of a reproduced signal.

Therefore, with the foregoing in mind, it is an object of the present invention to provide an optical information recording method, an optical information recording apparatus, and an optical information recording medium capable of recording/reproducing data of satisfactory signal quality stably over a wide linear velocity range with respect to the same medium.

In order to achieve the above-mentioned object, a first optical information recording method of the present invention includes: forming a recording pulse for driving a laser so that a length of a mark or a space to be recorded on an optical information recording medium corresponds to a recording code length of data; forming the recording pulse as a recording pulse train having respective pulse heights corresponding to a plurality of power levels including a recording power $P_w$ and an erasure power $P_e$; composing the recording pulse train of a plurality of pulses including a multi-pulse and a trailing pulse with respect to at least one kind of the recording code length; and irradiating the optical information recording medium at a plurality kinds of linear velocities with laser light based on the recording pulse to vary optical characteristics of a photosensitive recording film, thereby forming the mark or the space. When two kinds of linear velocities v1 and v2 among the plurality of kinds of linear velocities are in a relationship represented by v1 < v2, the following formulas are satisfied:

$(T_{L1}/T_{w1}) < (T_{L2}/T_{w2})$, and $((T_{M2}/T_{w2})/(T_{M1}/T_{w1})) < ((T_{L2}/T_{w2})/(T_{L1}/T_{w1}))$, where
$T_{w1}$, $T_{w2}$ : respective channel dock periods at the linear velocities v1, v2
$T_{L1}$, $T_{L2}$ : respective trailing pulse widths at the linear velocities v1, v2
$T_{M1}$, $T_{M2}$ : respective multi-pulse widths at the linear velocities v1, v2.

According to the above-mentioned method, a mark without distortion can be formed at a low linear velocity, and insufficient erasure during overwrite can be eliminated at a high linear velocity. Therefore, data can be recorded with satisfactory signal quality over a wide linear velocity range.

In the first optical information recording method, it is preferable that $T_{L1} = T_{M1}$. According to this configuration, it is not necessary to generate and correct only a trailing pulse independently at the linear velocity v1, so that the configuration of the apparatus can be simplified.

In the first optical information recording method, instead of forming a multi-pulse, a power level $P_w$ of a back portion of the recording pulse may be set to be different from a power level $P_b$ in a center portion of the recording pulse, hereby forming a trailing pulse with respect to at least one recording code length. In this case, in place of the above-mentioned Conditional Formula, the following formulas are satisfied:

$(T_{L1}/T_{w1}) < (T_{L2}/T_{w2})$, and $(\alpha2/\alpha1) < ((T_{L2}/T_{w2})/(T_{L1}/T_{w1}))$, where
v1: a power level ratio $\alpha1$ at the linear velocity v1, $\alpha1 = (P_w - P_{b1})/(P_w - P_e)$
v2: a power level ratio $\alpha2$ at the linear velocity v2, $\alpha2 = (P_w - P_{b2})/(P_w - P_e)$
$P_{b1}$: a power level in a center portion of the recording pulse at the linear velocity v1
$P_{b2}$: a power level in a center portion of the recording pulse at the linear velocity v2.

Furthermore, according to the first optical information recording method, when a channel clock period is T, and a trailing pulse width is $T_L$ at a linear velocity v between the linear velocity v1 and the linear velocity v2, the trailing pulse width $T_L$ may be controlled so as to increase $(T_l/T)$ in accordance with an increase in the linear velocity v. This enables the light-emission waveform at an intermediate linear velocity to be determined easily.

In order to achieve the above-mentioned object, a second optical information recording method of the present invention includes: forming a recording pulse for driving a laser so that a length of a mark or a space to be recorded on an optical information recording medium corresponds to a recording code length of data; forming the recording pulse as a recording pulse train having respective pulse heights corresponding to a plurality of power levels including a recording power $P_w$ and an erasure power $P_e$; composing the recording pulse train of a plurality of pulses including a leading pulse with respect to at least one kind of the recording code length; and irradiating the optical information recording medium at a plurality kinds of linear velocities with laser light based on the recording pulse to vary optical characteristics of a photosensitive recording film, thereby forming the mark or the space. When two kinds of linear velocities v1 and v2 among the plurality of kinds of linear velocities are in a relationship represented by v1 < v2, the following formula is satisfied:

$(T_{S1}/T_{w1}) > (T_{S2}/T_{w2})$, where
$T_{w1}$, $T_{w2}$ : respective channel dock periods at the linear velocities v1, v2
$T_{S1}$, $T_{S2}$ : respective leading pulse widths at the linear velocities v1, v2.

According to the above-mentioned method, a mark without distortion can be formed at a low linear velocity, so that data can be recorded with satisfactory signal quality over a wide linear velocity range.

In the second optical information recording method, it is preferable that the recording pulse train includes a multi-pulse continuing to the leading pulse, and when multi-pulse widths at the linear velocities v1, v2 respectively are $T_{M1}$, $T_{M2}$, $((T_{M1}/T_{w1})/(T_{M2}/T_{w2})) < ((T_{S1}/T_{w1})/(T_{S2}/T_{w2}))$ is satisfied.

In the second optical information recording method, instead of forming a multi-pulse, a power level $P_w$ of a front portion of the recording pulse may be set to be different from a power level $P_b$ in a center portion of the recording pulse, hereby forming a leading pulse with respect to at least one recording code length.

In this case, it is preferable that in place of the above-mentioned Conditional Formula, the following formula is satisfied:

$(\alpha2/\alpha1) < ((T_{S1}/T_{w1})/(T_{S2}/T_{w2}))$, where
v1: a power level ratio $\alpha1$ at the linear velocity v1, $\alpha1 = (P_w - P_{b1})/(P_w - P_e)$
v2: a power level ratio $\alpha2$ at the linear velocity v2, $\alpha2 = (P_w - P_{b2})/(P_w - P_e)$
$P_{b1}$: a power level in a center portion of the recording pulse at the linear velocity v1
$P_{b2}$: a power level in a center portion of the recording pulse at the linear velocity v2.

This enables data to be recorded with satisfactory signal quality over a wide linear velocity range.

Furthermore, in the optical information recording method, when trailing pulse widths at the linear velocities v1, v2 respectively are $T_{L1}$, $T_{L2}$, it is preferable that $(T_{L1}/T_{w1}) < (T_{L2}/T_{w2})$ is satisfied. According to this method, data can be recorded with more satisfactory signal quality over a wide linear velocity range.

Furthermore, in the second optical information recording method, when a channel clock period is T, and a leading pulse width is Ts at a linear velocity v between the linear velocity v1 and the linear velocity v2, the leading pulse width Ts can be controlled so as to decrease ($T_S/T$) in accordance with an increase in the linear velocity v.

Furthermore, in the first or second optical information recording method, it is preferable that data is recorded on an optical information recording medium by a CAV recording system. This enables data to be recorded with satisfactory signal quality irrespective of the recording/reproducing position in a medium.

Furthermore, in the first or second optical information recording method, it is preferable that a power level between the recording pulses is set to be different from the erasure power $P_e$. This enables the cooling speed during recording to be controlled optimally in accordance with a linear velocity, so that data can be recorded with more satisfactory signal quality.

In this case, it is preferable that a power level between the recording pulses at the linear velocity v2 is set to be higher than a power level between the recording pulses at the linear velocity v1. According to this configuration, the cooling speed during recording does not become excessive at a high linear velocity. Therefore, insufficient erasure during overwrite decreases, and data can be recorded with more satisfactory signal quality.

Furthermore, in order to achieve the above-mentioned object, a first optical information recording apparatus of the present invention includes: a linear velocity setting circuit for setting a plurality of different kinds of linear velocities in recording on an optical information recording medium; a recording pulse generation circuit for generating a recording pulse in accordance with a setting result of the linear velocity setting circuit; and a laser driving circuit for radiating laser light based on the recording pulse. The recording pulse generation circuit forms a recording pulse for driving a laser so that a length of a mark or a space to be recorded on an optical information recording medium corresponds to a recording code length of data, forms the recording pulse as a recording pulse train having respective pulse heights corresponding to a plurality of power levels including a recording power $P_w$ and an erasure power $P_e$, and composes the recording pulse train of a plurality of pulses including a multi-pulse and a trailing pulse with respect to at least one kind of the recording code length. When two kinds of linear velocities v1 and v2 among the plurality of kinds of linear velocities are in a relationship represented by v1 < v2, the recording pulse generation circuit controls the trailing pulse widths so as to satisfy the following formulas:

$(T_{L1}/T_{w1}) < (T_{L2}/T_{w2})$ and $((T_{M2}/T_{w2})/(T_{M1}/T_{w1})) < ((T_{L2}/T_{w2})/(T_{L1}/T_{w1}))$, where
$T_{w1}$, $T_{w2}$ : respective channel dock periods at the linear velocities v1, v2
$T_{L1}$, $T_{L2}$ : respective trailing pulse widths at the linear velocities v1, v2
$T_{M1}$, $T_{M2}$ : respective multi-pulse widths at the linear velocities v1, v2.

In the above-mentioned apparatus, a mark without distortion can be formed at a low linear velocity, and insufficient erasure during overwrite can be eliminated at a high linear velocity. Therefore, data can be recorded with satisfactory signal quality over a wide linear velocity range.

In the first optical information recording apparatus, it is preferable that the recording pulse generation circuit controls the trailing pulse widths so as to satisfy $T_{L1} = T_{M1}$. According to this configuration, it is not necessary to generate and correct only a trailing pulse independently at the linear velocity v1, so that the configuration of the apparatus can be simplified.

Furthermore, in the first optical information recording apparatus, instead of forming a multi-pulse, a power level $P_w$ of a back portion of the recording pulse may be set to be different from a power level $P_b$ in a center portion of the recording pulse, hereby forming a trailing pulse with respect to at least one recording code length. In this case, in place of the above-mentioned Conditional Formula, the following formulas are satisfied:

$(T_{L1}/T_{w1}) < (T_{L2}/T_{w2})$, and $(\alpha2/\alpha1) < ((T_{L2}/T_{w2})/(T_{L1}/T_{w1}))$, where
v1: a power level ratio $\alpha1$ at the linear velocity v1, $\alpha1 = (P_w - P_{b1})/(P_w - P_e)$
v2: a power level ratio $\alpha2$ at the linear velocity v2, $\alpha2 = (P_w - P_{b2})/(P_w - P_e)$
$P_{b1}$: a power level in a center portion of the recording pulse at the linear velocity v1
$P_{b2}$: a power level in a center portion of the recording pulse at the linear velocity v2.

Furthermore, in the first optical information recording apparatus, when the channel dock period is T, and the trailing pulse width is $T_L$ at a linear velocity v between the linear velocity v1 and the linear velocity v2, the recording pulse generation circuit controls the trailing pulse widths so as to increase ($T_L/T$) in accordance with an increase in the linear velocity v. This enables the light-emission waveform at an intermediate linear velocity to be determined easily.

Furthermore, in order to achieve the above-mentioned object, a second optical information recording apparatus of the present invention includes: a linear velocity setting circuit for setting a plurality of different kinds of linear velocities in recording on an optical information recording medium; a recording pulse generation circuit for generating a recording pulse in accordance with a setting result of the linear velocity setting circuit; and a laser driving circuit for radiating laser light based on the recording pulse. The recording pulse generation circuit forms a recording pulse for driving a laser so that a length of a mark or a space to be recorded on an optical information recording medium corresponds to a recording code length of data, forms the recording pulse as a recording pulse train having respective pulse heights corresponding to a plurality of power levels including a recording power $P_w$ and an erasure power $P_e$, and composes the recording pulse train of a plurality of pulses including a leading pulse with respect to at least one kind of the recording code length. When two kinds of linear velocities v1 and v2 among the plurality of kinds of linear velocities are in a relationship represented by v1 < v2, the recording pulse generation circuit controls the leading pulse widths so as to satisfy the following formulas:

$(T_{S1}/T_{w1}) > (T_{S2}/T_{w2})$, where
$T_{w1}$, $T_{w2}$ : respective channel dock periods at the linear velocities v1, v2
$T_{S1}$, $T_{S2}$ : respective leading pulse widths at the linear velocities v1, v2.

In the above-mentioned apparatus, a mark without distortion can be formed at a low linear velocity, so that data can be recorded with satisfactory signal quality over a wide linear velocity range.

In the second optical information recording apparatus, it is preferable that the recording pulse train includes a multi-pulse continuing to the leading pulse, and when multi-pulse widths at the linear velocities v1, v2 respectively are $T_{M1}$, $T_{M2}$, the recording pulse generation circuit controls the leading pulse widths so as to satisfy $((T_{M1}T_{w1})/(T_{M2}/T_{w2})) < (T_{S1}/T_{w1})/(T_{S2}/T_{w2}))$.

Furthermore, in the second optical information recording apparatus, instead of forming a multi-pulse, a power level $P_w$ of a front portion of the recording pulse may be set to be different from a power level $P_b$ in a center portion of the recording pulse, hereby forming a leading pulse with respect to at least one recording code length.

In this case, it is preferable that in place of the above-mentioned Conditional Formula, the following formula is satisfied:

$(\alpha 2/\alpha 1) < ((T_{S1}/T_{w1})/(T_{S2}/T_{w2}))$, where
v1: a power level ratio $\alpha 1$ at the linear velocity v1, $\alpha 1 = (P_w - P_{b1})/(P_w - P_e)$
v2: a power level ratio $\alpha 2$ at the linear velocity v2, $\alpha 2 = (P_w - P_{b2})/(P_w - P_e)$
$P_{b1}$: a power level in a center portion of the recording pulse at the linear velocity v1
$P_{b2}$: a power level in a center portion of the recording pulse at the linear velocity v2.

This enables data to be recorded with satisfactory signal quality over a wide linear velocity range.

Furthermore, in the second optical information recording apparatus, when trailing pulse widths at the linear velocities v1, v2 respectively are $T_{L1}$, $T_{L2}$, it is preferable that the recording pulse generation circuit controls the trailing pulse widths so as to satisfy $(T_{L1}/T_{w1}) < (T_{L2}/T_{w2})$.

Furthermore, in the second optical information recording apparatus, when a channel dock period is T, and a leading pulse width is Ts at a linear velocity v between the linear velocity v1 and the linear velocity v2, the recording pulse generation circuit controls the leading pulse width Ts so as to decrease (Ts/T) in accordance with an increase in the linear velocity v. This enables the light-emission waveform at an intermediate linear velocity to be determined easily.

Furthermore, in order to achieve the above-mentioned object, an optical information recording medium of the present invention is used for recording data by the above-mentioned first or second optical information recording method, and information representing values of $T_{L1}$ and $T_{L2}$ or information representing values of $T_{S1}$ and $T_{S2}$ is recorded on the optical information recording medium.

Furthermore, the optical information recording medium is used for recording data by an optical information recording method, in which when a channel clock period is T, and a trailing pulse width is $T_L$ at a linear velocity v between the linear velocity v1 and the linear velocity v2, the trailing pulse width $T_L$ is controlled so as to increase $(T_L/T)$ in accordance with an increase in the linear velocity v, and information determining $T_L$ is recorded on the optical information recording medium.

Alternatively, the optical information recording medium is used for recording data by an optical information recording method, in which when a channel dock period is T, and a leading pulse width is Ts at a linear velocity v between the linear velocity v1 and the linear velocity v2, the leading pulse width Ts is controlled so as to decrease $(T_S/T)$ in accordance with an increase in the linear velocity, and information determining Ts is recorded on the optical information recording medium.

According to the optical information recording medium with the above-mentioned configuration, immediately after the medium is inserted in the optical information recording apparatus, the pulse width can be determined in accordance with a linear velocity.

These and other advantages of the present invention will become apparent to those skilled in the art upon reading and understanding the following detailed description with reference to the accompanying figures.

FIG. 1 is a block diagram showing a configuration of an optical information recording/reproducing apparatus according to an embodiment of the present invention.

FIG. 2 is a flow chart showing the procedure of the optical information recording method according to Embodiment 1 of the present invention.

FIG. 3 shows a signal waveform and a recorded pattern in one example of modulating laser light to record a mark at a low linear velocity by the recording method.

FIG. 4 shows a signal waveform and a recorded pattern representing a problem in modulating laser light to record a mark in the case of a low linear velocity.

FIG. 5 shows a signal waveform and a recorded pattern representing a problem in modulating laser light to record a mark in the case of a low linear velocity.

FIG. 6 shows a signal waveform and a recorded pattern in one example of modulating laser light to record a mark in recording at a high linear velocity in Embodiment 1.

FIG. 7 is a flow chart showing the procedure of an optical information recording method according to Embodiment 2 of the present invention.

FIG. 8 shows a signal waveform and a recorded pattern in one example of modulating laser light to record a mark at a high linear velocity according to the recording method.

FIG. 9 shows a signal waveform and a recorded pattern in one example of modulating laser light to record a mark at a low linear velocity in Embodiment 2.

FIG. 10 shows a signal waveform and a recorded pattern representing a problem in modulating laser light to record a mark in the case of a low linear velocity

FIG. 11 shows a signal waveform and a recorded pattern representing a problem in modulating laser light to record a mark in the case of a low linear velocity.

FIG. 12 illustrates a change in the width of a trailing pulse with respect to the linear velocity in the optical information recording method according to Embodiment 3.

FIG. 13 illustrates a change in the width of a leading pulse with respect to the linear velocity in the optical information recording method.

FIG. 14 is a waveform diagram illustrating a recording pulse in Embodiment 4.

FIG. 15 shows a signal waveform and a recorded pattern in the case of modulating laser light to record a mark at a high linear velocity in the conventional example.

Hereinafter, the present invention will be described by way of illustrative embodiments with reference to the drawings.

Embodiment 1

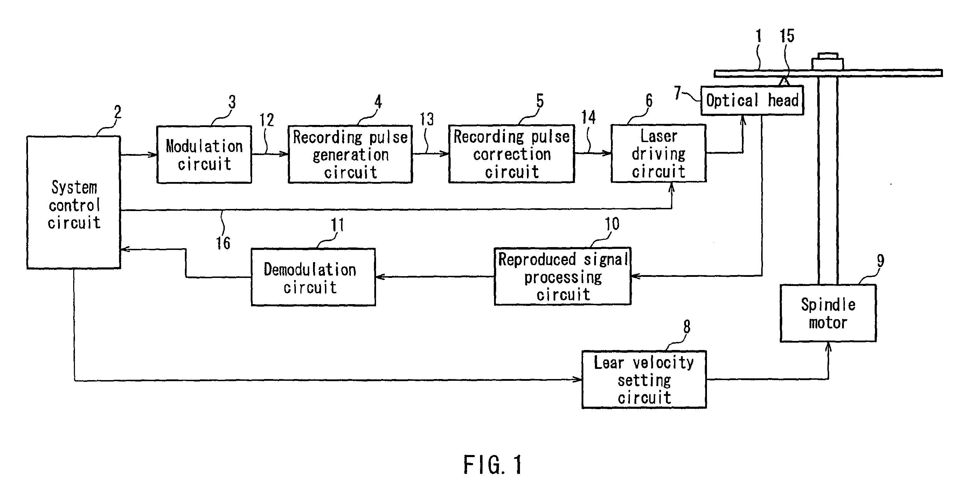

First, the schematic configuration of an optical information recording apparatus in Embodiment 1 will be described with reference to a block diagram of FIG. 1. Although FIG. 1 shows the optical information recording/reproducing apparatus, the embodiment of the present invention is characterized by the configuration of a portion corresponding to a recording apparatus in this optical information recording/reproducing apparatus. Furthermore, the basic configuration of the optical information recording apparatus shown in FIG. 1 is common to the following respective embodiments.

Reference numeral 1 denotes an optical disk for recording/reproducing data, and reference numeral 2 denotes a system control circuit for controlling the entire recording/reproducing apparatus. Based on a signal supplied from a system control circuit 2, a modulation circuit 3 generates a binarized modulation signal 12 in accordance with data to be recorded. A recording pulse generation circuit 4 generates a recording pulse signal for driving a laser in accordance with the modulation signal 12 output from the modulation circuit 3. Each recording pulse signal is output as a recording pulse signal 14 with its width and edge position corrected by a recording pulse correction circuit 5.

A laser driving circuit 6 modulates a current for driving a laser in an optical head 7 based on a recording pulse signal 14 output by the recording pulse correction circuit 5, and a power setting signal 16 supplied from the system control circuit 2. An optical head 7 focuses laser light 15 and irradiates the optical disk 1 with the laser light 15. The optical disk 1 has its linear velocity (i.e., rotation number) controlled by a linear velocity setting circuit 8. Reference numeral 9 denotes a spindle motor for rotating the optical disk 1. A reproduced signal based on light reflected from the optical disk 1 is subjected to waveform processing by a reproduced signal processing circuit 10, and supplied to a demodulation circuit 11 for obtaining reproduced data.

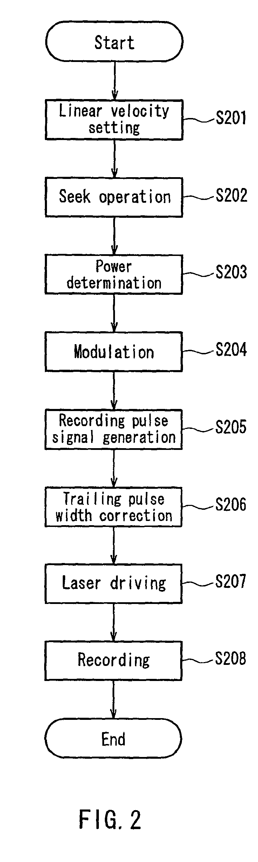

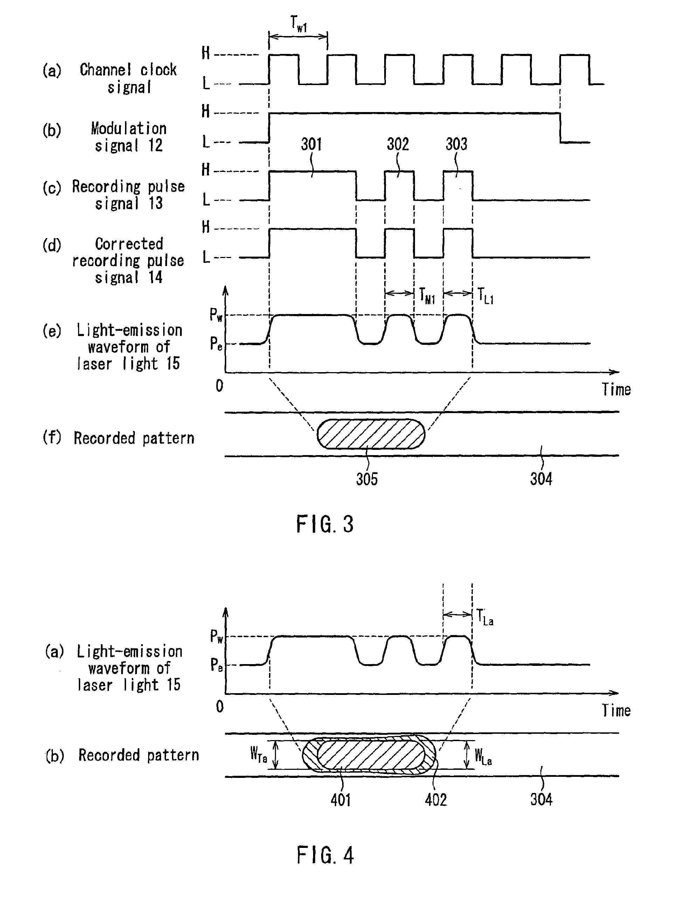

Next, the optical information recording method and the optical information recording apparatus in Embodiment 1 will be described with reference to a flow chart of FIG. 2 and operation diagrams of FIGS. 3 to 6.

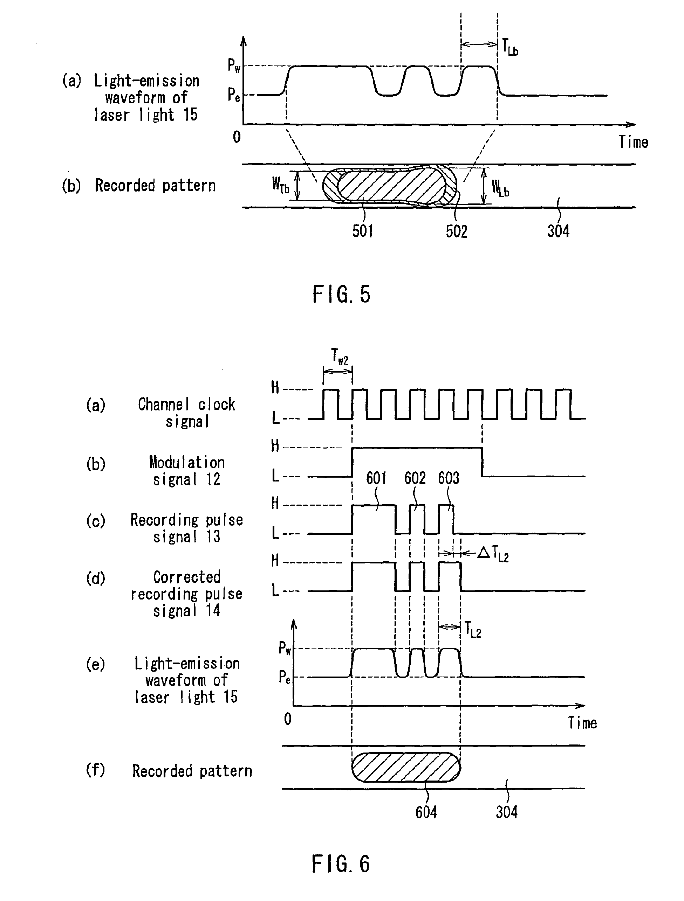

FIG. 2 shows a recording procedure according to the optical information recording method of Embodiment 1. FIG. 3 shows a signal waveform and a recorded pattern on a track in the case of recording data with a lower linear velocity according to the optical information recording method of Embodiment 1. FIGS. 4 and 5 show a signal waveform and a recorded pattern when the width of a trailing pulse is varied in the case of recording data with a low linear velocity. FIG. 6 shows a signal waveform and a recorded pattern in the case of recording data with a high linear velocity.

FIGS. 3 to 6 show an operation by exemplifying the case where a mark with a code length 5T is recorded. T is equal to a channel clock period $T_w$. In embodiment 1, a recording pulse train composed of three recording pulses in total is used for recording the code length 5T. When code lengths other than the code length 5T are recorded, the number of recording pulses and/or the full length of a recording pulse train are varied in accordance with the increase/decrease in a code length.

In each of FIGS. 3 and 6, (a) represents a channel clock signal, (b) represents a waveform of the modulation signal 12 (see FIG. 1), (c) represents a waveform of the recording pulse signal 13, (d) represents a waveform of the corrected recording pulse signal 14, and (e) represents a light-emission waveform of the laser light 15. The recording pulse signals 13 respectively are composed of a recording pulse train including leading pulses 301, 601, multi-pulses 302, 602, and trailing pulses 303, 603. In these figures, (f) represents a recorded pattern on a track 304 on which a mark 305 or 604 is recorded with the laser light 15. In FIGS. 4 and 5, (a) represents the light-emission waveform of the laser light 15, and (b) represents a recorded pattern on the track 304 on which the mark 401 or 501 is recorded.

First, the operation of recording, in particular, data at a low linear velocity v1 (i.e., recording at a low transfer rate) in the present embodiment will be described with reference to a flowchart of FIG. 2.

During recording, first, in a linear velocity setting step (Step S201, hereinafter, the term "step" will be omitted), the linear velocity setting circuit 8 controls the number of rotations of the spindle motor 9 based on an instruction from the system control circuit 2, whereby the optical disk 1 is rotated at a predetermined linear velocity. Then, in a seek operation step (S202), the optical head 7 (see FIG. 1) is positioned in a predetermined recording region on the optical disk 1.

Then, in a power determination step (S203), the system control circuit 2 determines the optimum recording power, erasure power, and the like at this linear velocity, and outputs the power setting signal 16 to the laser driving circuit 6. These power levels can be determined by test recording with respect to the optical disk 1. If information representing a power level is recorded in a control track region of the optical disk 1, the power level may be determined by reading the information.

Next, in a modulation step (S204), recording data from the system control circuit 2 is modulated by the modulation circuit 3 based on the channel clock signal represented by (a) of FIG. 3. The modulation circuit 3 outputs the modulation signal 12 represented by FIG. 3(b).

Next, in a recording pulse signal generation step (S205), the recording pulse generation circuit 4 outputs the recording pulse signal 13 represented by (c) of FIG. 3 based on the modulation signal.

Next, in a trailing pulse width correction step (S206), the recording pulse correction circuit 5 corrects the width and edge position of each recording pulse constituting the recording pulse signal 13, and outputs the corrected recording pulse signal 14 to the laser driving circuit 6. In the present embodiment, in the case of a low linear velocity v1, the trailing pulse is not corrected.

Next, in a laser driving step (S207), the laser driving circuit 6 modulates the power level of the laser light 15. The power level is determined by the corrected recording pulse signal 14 and the power setting signal 16 from the system control circuit 2. More specifically, in the case where a recording pulse train signal is H, light is emitted at the recording power $P_w$, and in the case where a recording pulse train signal is L, light is emitted at the erasure power $P_e$. Consequently, the light-emission waveform of the laser light 15 has its power level varied as represented by (e) of FIG. 3.

Next, in a recording step (S208), a mark 305 corresponding to the code length 5T is formed on the recording track 304 with the laser light 15, as shown in the recorded pattern in (f) of FIG. 3.

At the low linear velocity v1, in order to prevent the mark back portion from having a width larger than that of the mark front portion to distort the shape of a mark, $T_{L1}$ is set to be smaller than $T_{w1}$. This will be described with reference to FIGS. 4 and 5.

FIGS. 4 and 5 show the states where the molten region and the mark shape are varied depending upon a trailing pulse width $T_{L1}$ in the case of recording at a low linear velocity. FIG. 4 shows a laser light-emission waveform (a) and a recorded pattern (b) in the case of recording with a trailing pulse width $T_{La}$ (corresponding to the present embodiment), and FIG. 5 shows a laser light-emission waveform (a) and a recorded pattern (b) in the case of recording with a larger trailing pulse width $T_{Lb}$.

When a mark back portion is recorded, heat generated when a mark front portion is recorded is conducted to the back portion, so that heat is likely to be accumulated. Therefore, as represented by molten regions 402, 502 in (b) of FIG. 4 and (b) of FIG. 5, the width of the molten region of the back portion (width in a direction orthogonal to a track) tends to become larger than that of the mark center portion. This tendency is exhibited remarkably in the case where the linear velocity is lower.

Therefore, when data is recorded by setting a trailing pulse width $T_{Lb}$ to be large relative to the channel clock period $T_w$ as represented by (a) of FIG. 5, a width $W_{Lb}$ of a back portion of the mark 501 becomes large due to the enlargement of the molten region 502 of the mark back portion, as represented by (b) of FIG. 5. Consequently, a width $W_{Tb}$ of a mark front portion and the width $W_{Lb}$ of the mark back portion become different from each other, and the shape of a mark to be formed is distorted, whereby the signal quality when this mark is reproduced becomes degraded.

In contrast, as represented by (a) of FIG. 4, when data is recorded by setting the trailing pulse width $T_{La}$ to be small relative to the channel clock period $T_w$, as represented by (b) of FIG. 4, the enlargement of the molten region 402 of the mark back portion is suppressed. Consequently, the width $W_{La}$ of the back portion of the mark 401 does not become excessively large, and a satisfactory mark shape without any distortion, in which the width $W_{Ta}$ of the mark front portion is equal to the width $W_{La}$ of the mark back portion, is obtained. Thus, reproduction can be performed with satisfactory signal quality.

On the other hand, (a) to (e) of FIG. 6 show the signal waveform of each part of the apparatus in the case of recording at a high linear velocity v2 (i.e., recording at a high transfer rate) based on the present embodiment, and (f) of FIG. 6 shows the recorded pattern on the track.

This configuration is different from the case of a low linear velocity v1 in that, in the trailing pulse correction step (S206) shown in FIG. 2, the trailing pulse width $T_{L2}$ is enlarged by $\Delta T_{L2}$ at the trailing edge, whereby the ratio of the trailing pulse width $T_{L2}$ with respect to the channel clock period $T_{w2}$ is increased. Consequently, more heat is given when a mark back portion is formed, and the mark back portion is cooled gradually after melting. This can prevent an amorphous region from becoming too stable due to the excessive cooling speed during formation of the mark back portion. Thus, at a high linear velocity at which the relative velocity between the laser spot and the medium increases, insufficient erasure does not occur during overwriting, and data can be recorded with satisfactory signal quality.

In the corrected recording pulse signal 14 in (d) of FIGS. 3 and 6, the duty ratio of the multi-pulses 302, 602 is not varied. Therefore, even when the channel clock period $T_{w2}$ becomes smaller, the width between the recording pulses does not become extremely small. Consequently, even in the case of a high linear velocity, laser light can be subjected to modulation and light-emission operations stably between the respective power levels. Furthermore, since heat energy is not given excessively during recording of the mark center portion, the distortion of a mark in which the mark center portion becomes wide can be suppressed.

As described above, in the present embodiment, two kinds of linear velocities v1 and v2 (v1 < v2) are set so as to satisfy the following Conditional Formula (1)

$$(T_{L1}/T_{w1}) < (T_{L2}/T_{w2}) \tag{1}.$$

More specifically, the ratio of the width of the trailing pulse with respect to the channel clock period is varied between the cases of the low linear velocity v1 and the high linear velocity v2 as represented by the relationships in (e) of FIGS. 3 and 6, whereby the trailing pulse width is set to be relatively small at a low linear velocity, and to be relatively large at a high linear velocity. This enables a mark without distortion to be formed, and eliminates insufficient erasure during overwriting at a high linear velocity.

Furthermore, although in the above example the duty ratio of a multi-pulse is set to be constant between the low linear velocity and the high linear velocity, the duty ratio of the multi-pulse also may be increased along with an increase in a linear velocity. The increase ratio of a multi-pulse width with respect to the increase ratio of a linear velocity is set to be smaller than that of the trailing pulse width. Thus, mark distortion in which the mark center portion becomes wide can be suppressed sufficiently, and the above-mentioned effect of the adjustment of the trailing pulse width can be obtained. More specifically, when the multi-pulse width at the low linear velocity v1 is $T_{M1}$, and the multi-pulse width at the high linear velocity v2 is $T_{M2}$, the following Conditional Formula (2) is satisfied. Herein, the multi-pulse width refers to the width of each individual pulse forming a multi-pulse.

$$((T_{M2}/T_{w2})/(T_{M1}/T_{w1})) < ((T_{L2}/T_{w2})/(T_{L1}/T_{w1})) \tag{2}$$

By satisfying the Conditional Formulas (1) and (2), a mark without any distortion even in the center portion can be formed, and insufficient erasure during overwriting can be eliminated at a high linear velocity, whereby data can be recorded over a wide linear velocity range with satisfactory signal quality.

In order to simplify the configuration of the apparatus, it is preferable that the duty ratio of a multi-pulse is set to be constant.

The linear velocities v1 and v2 are extracted so as to define the relative relationship with respect to two kinds of linear velocities among a plurality of kinds of linear velocities. That is, the invention is not limited to the case where only two kinds of linear velocities are used. More specifically, in the case where three or more kinds of linear velocities are used, the method of the present embodiment is applicable similarly.

Furthermore, in the present embodiment, if the trailing pulse width $T_{L1}$ is set to be equal to the multi-pulse width $T_{M1}$ at the lowest linear velocity v1, the trailing pulse at the linear velocity v1 can be generated in the same way as in the multi-pulse. Thus, it is not necessary to generate and correct the trailing pulse alone independently at the linear velocity v1, so that there is a further advantage in that the configuration of the apparatus can be simplified.

Embodiment 2

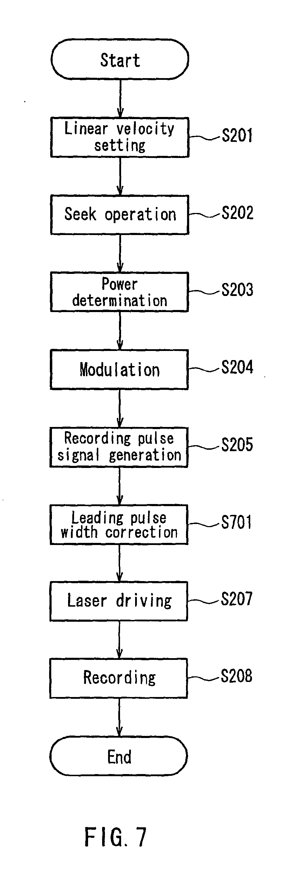

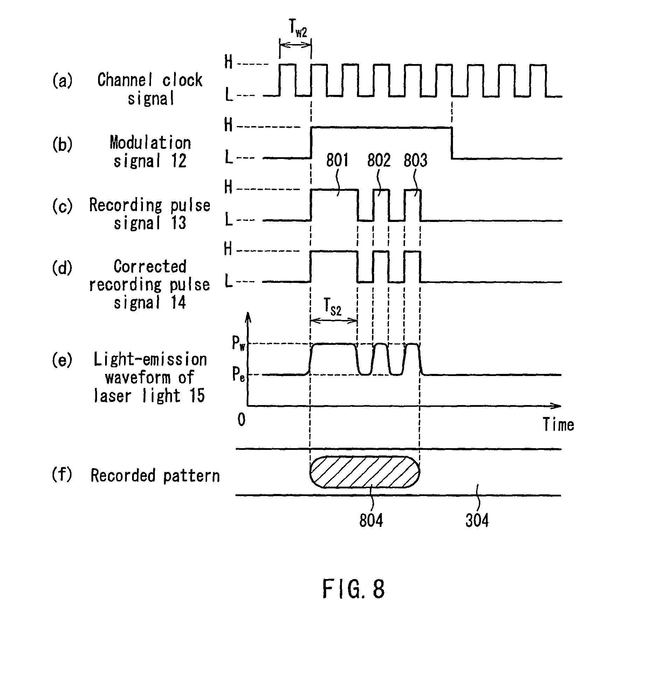

Next, an optical information recording method and an optical information recording apparatus in Embodiment 2 will be described with reference to the flow chart of FIG. 7 and the operation diagrams of FIGS. 8 to 11. The basic configuration of the optical information recording apparatus in the present embodiment is the same as that of Embodiment 1 shown in FIG. 1.

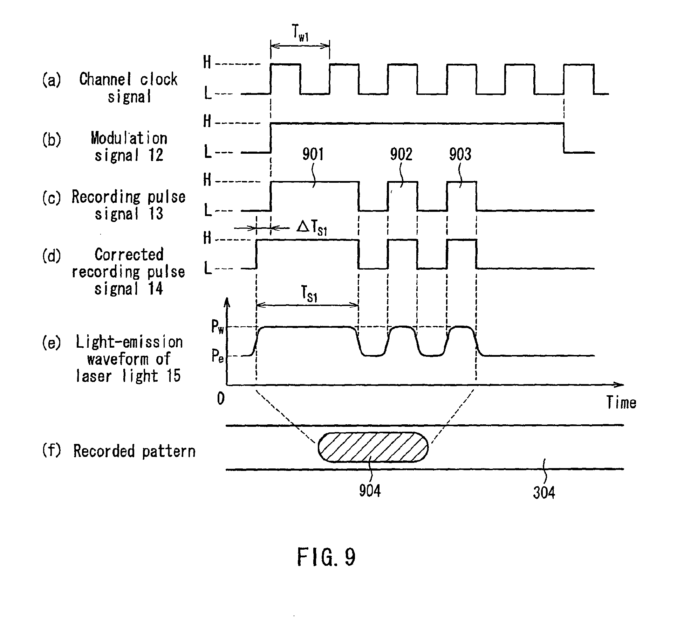

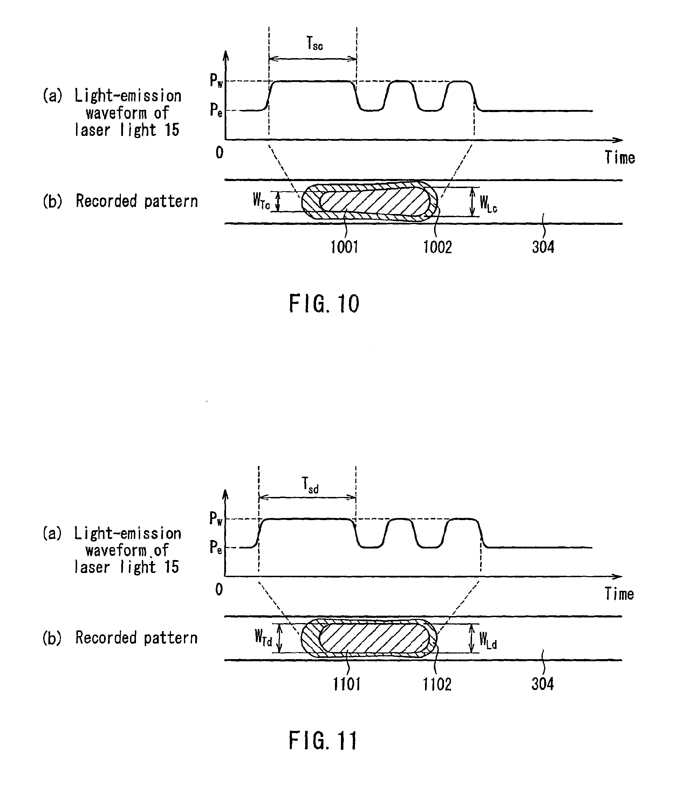

FIG. 7 shows a recording procedure according to the optical information recording method of the present embodiment. FIG. 8 shows a signal waveform and a recorded pattern on a track in the case of recording with a high linear velocity by the optical information recording method of the present embodiment. FIG. 9 shows a signal waveform and a recorded pattern in the case of recording with a low linear velocity. FIGS. 10 and 11 respectively show a signal waveform and a recorded pattern when the width of a leading pulse is varied in the case of recording with a low linear velocity. FIGS. 8 to 11 show an operation exemplifying the case where a mark with the code length 5T is recorded in the same way as in FIGS. 3 to 6.

In each of FIGS. 8 and 9, (a) represents a channel clock signal, (b) represents a waveform of a modulation signal 12 (see FIG. 1), (c) represents a waveform of a recording pulse signal 13, (d) represents a waveform of a corrected recording pulse signal 14, and (e) represents a light-emission waveform of laser light 15. The recording pulse signals 13 respectively are composed of a recording pulse train including leading pulses 801, 901, multi-pulses 802, 902, and trailing pulses 803, 903. In these figures, (f) represents a recorded pattern on a track 304 after a mark 804 or 904 is recorded with the laser light 15. In FIGS. 10 and 11, (a) represents a light-emission waveform of the laser light 15, and (b) represents a recorded pattern on the track 304 where a mark 1001 or 1101 is recorded.

First, an operation in the case of recording, in particular, data at a high linear velocity v2 (i.e., recording at a high transfer rate) in the present embodiment will be described with reference to the flow chart of FIG. 7. Herein, the same steps as those in the case of Embodiment 1 shown in FIG. 2 are denoted with the same reference numerals as those therein, and will be described briefly.

First, the optical head 7 is placed in a predetermined recording region on the optical disk 1 (see FIG. 1) rotated at a predetermined linear velocity in the linear velocity setting step (S201) and the seek operation step (S202).

Next, in the power determination step (S203), the system control circuit 2 determines appropriate recording power, erasure power, and the like at this linear velocity, and outputs a power setting signal 16 to the laser driving circuit 6. These power levels can be determined by test recording with respect to the optical disk 1. If information representing a power level is recorded in a control track region of the optical disk 1, the power level may be determined by reading the information.

Next, in the modulation step (S204), the recording data from the system control circuit 2 is modified by the modulation circuit 3 based on the channel clock signal represented by (a) of FIG. 8. The modulation circuit 3 sends the modulation signal 12 represented by (b) of FIG. 8.

Next, in the recording pulse signal generation step (S205), the recording pulse generation circuit 4 outputs a recording pulse signal 13 represented by (c) of FIG. 8 based on the modulation signal. Hitherto, the operation is the same as that in Embodiment 1.

Next, in a leading pulse width correction step (S701), the recording pulse correction circuit 5 corrects the width and edge position of each recording pulse constituting the recording pulse signal 13, and outputs a corrected recording pulse signal 14 to the laser driving circuit 6. In the present embodiment, in the case of the high linear velocity v2, the leading pulse is not corrected.

Next, in the laser driving step (S207), the laser driving circuit 6 modulates the power level of the laser light 15. The power level is determined by the corrected recording pulse signal 14 and the power setting signal 16 from the system control circuit 2. More specifically, in the case where the recording pulse train signal is H, light is emitted at a recording power $P_w$, and light is emitted as an erasure power $P_e$ in the case where the recording pulse train signal is L. Consequently, as represented by (e) of FIG. 8, the light-emission waveform of the laser light 15 has the power level varied as represented by (e) of FIG. 8.

Next, in the recording step (S208), as represented by (f) of FIG. 8, a mark 804 corresponding to the code length 5T is formed on the recording track 304 with the laser light 15.

On the other hand, (a) to (e) of FIG. 9 show signal waveforms of respective parts of the apparatus, and (f) of FIG. 9 shows a recorded pattern on a track, in the case of recording at a low linear velocity v1 (i.e., recording at a low transfer rate) based on the present embodiment.

The difference from the case of a high linear velocity lies in that, in the leading pulse width correction step (S701), the leading pulse width Tsi is enlarged by $\Delta T_{S1}$ at the leading edge, and the ratio of the leading pulse width $T_{S1}$ with respect to the channel clock period $T_{w1}$ is set to be large. This prevents the recrystallization after melting from proceeding during recording at a low linear velocity v1 to decrease the width of a mark front portion. This will be described with reference to FIGS. 10 and 11.

FIGS. 10 and 11 respectively show a state where a molten region and a mark shape are varied depending upon the leading pulse width Tsi in the case of recording at a low linear velocity. In FIG. 10, (a) represents a laser light-emission waveform and (b) represents a recorded pattern in the case of recording with a small leading pulse width $T_{Sc}$. In FIG. 11, (a) represents a laser light-emission waveform and (b) represents a recorded pattern in the case of recording with a large leading pulse width $T_{Sd}$ (corresponding to the present embodiment).

Regarding the mark front portion, the temperature after melting is unlikely to decrease since a laser continues to emit light with a recording power (i.e., the state of a high irradiation energy continues) even after the mark front portion is formed. Therefore, as represented by (b) of FIG. 10, the width of a mark 1001 to be formed tends to be smaller than that of a molten region 1002. This tendency is exhibited more remarkably as data is recorded at a lower linear velocity. Consequently, a width $W_{Tc}$ of a mark front portion and a width $W_{Lc}$ of a mark back portion become different, and the shape of a mark to be formed is distorted, whereby the signal quality when the mark is reproduced decreases.

In contrast, as represented by (a) of FIG. 11, when data is recorded by setting the leading pulse width to be large relative to the channel clock period $T_w$, the portion corresponding to the mark front portion of a molten region 1102 is enlarged, which compensates for the decrease in a width of the mark 1101 to be formed, as represented by (b) of FIG. 11. Consequently, a satisfactory mark shape without distortion in which the width $W_{Td}$ of the mark front portion is equal to the width $W_{Ld}$ of the mark back portion is obtained. Thus, data can be reproduced with satisfactory signal quality.

As described above, the summary of the present embodiment is that the lower linear velocity v1 and the high linear velocity v2 are set so as to satisfy the following Conditional Formula (3)

$$(T_{S1}/T_{w1}) > (T_{S2}/T_{w2}) \tag{3}$$

More specifically, the ratio of the leading pulse width with respect to the channel clock period is varied as represented by the relationships in (e) of FIG. 8 and (e) of FIG. 9, whereby the leading pulse width is increased relatively at a low linear velocity and decreased relatively at a high linear velocity. This enables a mark without distortion to be formed at a low linear velocity, so that data can be recorded with satisfactory signal quality over a wide linear velocity range.

Furthermore, the duty ratio of a multi-pulse also may be increased in accordance with a decrease in a linear velocity. The increase ratio of the multi-pulse width with respect to the decrease ratio of the linear velocity is set to be smaller with respect to the increase ratio of the leading pulse. Thus, mark distortion in which a mark center portion becomes wide can be suppressed in the same way as in Embodiment 1. That is, when the multi-pulse width at the low linear velocity v1 is $T_{M1}$, and the multi-pulse width at the high linear velocity v2 is $T_{M2}$, the following Conditional Formula (4) is satisfied

$$((T_{M1}/T_{w1})/(T_{M2}/T_{w2})) < ((T_{S1}/T_{w1})/(T_{S2}/T_{w2})) \tag{4}$$

In order to simplify the configuration of the apparatus, it is preferable to set the duty ratio of a multi-pulse to be constant.

Embodiment 3

In the above-mentioned two embodiments, the case where data is recorded at two kinds of linear velocities: a low linear velocity v1 and a high linear velocity v2 has been described. In a CAV recording system, the linear velocity and the transfer rate are varied continuously depending upon the recording/reproducing position on a medium. In such a case, it is preferable that, by smoothly connecting the light-emission waveform at the low linear velocity v1 to the light-emission waveform at the high linear velocity v2, the light-emission waveform at an intermediate linear velocity is determined. The present embodiment is an example in which the optical information recording method of Embodiment 1 or 2 is configured in such an embodiment.

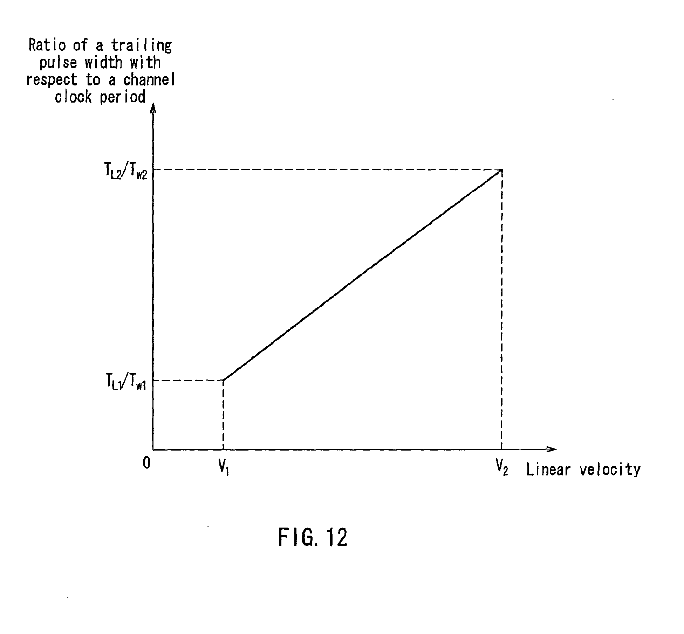

FIG. 12 shows an example of setting a trailing pulse width when data is recorded with a linear velocity varied continuously in a range of v1 to v2 in Embodiment 1. At the linear velocity v1, light is emitted with the light-emission waveform of laser light represented by (e) of FIG. 3, i.e., at the ratio $(T_{L1}/T_{w1})$ of the width of the trailing pulse with respect to the channel clock period. At the linear velocity v2, light is emitted with the light-emission waveform represented by (e) of FIG. 6, i.e., at the ratio $(T_{L2}/T_{w2})$ of the trailing pulse with respect to the channel clock period. Then, the ratio of the trailing pulse width with respect to the channel clock period is varied smoothly between the ratio $(T_{L1}/T_{w1})$ at the linear velocity v 1 and the ratio $(T_{L2}/T_{w2})$ at the linear velocity v2. This variation may be a linear variation as shown in FIG. 12, a smoothly curved monotonous variation, or a monotonous variation in stages. It is desirable that the ratio of the trailing pulse width with respect to the channel clock period is set to increase in accordance with an increase in a linear velocity.

Similarly, FIG. 13 shows an example of setting a leading pulse width when data is recorded with a linear velocity varied continuously in a range of v1 to v2 in Embodiment 2. In the same way as in the embodiment shown in FIG. 12, the ratio of the leading pulse width with respect to the channel clock period is varied smoothly between the ratio $(T_{S1}/T_{w1})$ at the linear velocity v1 and the ratio $(T_{S2}/T_{w2})$ at the linear velocity v2. At this time, it is desirable that the ratio of the leading pulse width with respect to the channel clock period is set to decrease in accordance with an increase in a linear velocity.

In the embodiment in which the recording pulse width is varied depending upon the linear velocity as shown in FIGS. 12 and 13, a simplest method for determining the recording pulse width in a range between the linear velocities v1 and v2 is to determine the recording pulse width by interpolating the recording pulse width at a desired linear velocity based on the recording pulse widths at respective linear velocities v1, v2.

Embodiment 4

In the above-mentioned respective embodiments, as represented by (a) of FIG. 14, an example in which a recording pulse train is configured by providing a multi-pulse between the leading pulse and the trailing pulse has been described. In contrast, as represented by (b) of FIG. 14, the recording pulse also can be configured with a region between the leading pulse and the trailing pulse set to be a constant power level $P_b$. Even in this case, if the leading pulse width and the trailing pulse width are varied in the relationship as in each of the above-mentioned embodiments, data similarly can be recorded with satisfactory signal quality.

The power level $P_b$ between the leading pulse and the trailing pulse desirably is fixed preferably in order to simplify the configuration of the apparatus. However, the power level $P_b$ also can be varied in accordance with a change in a linear velocity. The change ratio of the power level $P_b$ with respect to the change ratio of the linear velocity is set to be smaller than that of the trailing pulse width. Thus, the above-mentioned effect obtained by adjusting the trailing pulse width or the leading pulse width while sufficiently suppressing mark distortion in which a mark center portion becomes wide can be achieved. The conditions for setting the change ratio of the power level $P_b$ will be described below.

A power level ratio $\alpha$ is defined by the following Conditional Formula (5) with respect to a recording power $P_w$, an erasure power $P_e$, and a power level $P_b$

$$\alpha = (P_w - P_b)/(P_w - P_e) \tag{5}.$$

According to this definition, the duty ratio between the power level ratio $\alpha$ and the multi-pulse becomes equivalent in terms of energy. The power level ratio $\alpha1$ at the linear velocity v1 and the power level ratio $\alpha2$ at the linear velocity v2 are as represented by the following Conditional Formulas (6) and (7)

$$\alpha1 = (P_w - P_{b1}/(P_w - P_e) \tag{6}$$

$$\alpha2 = (P_w - P_{b2})/(P_w - P_e) \tag{7}.$$

In the formulas, $P_{b1}$ represents a power level in a center portion of the recording pulse at the linear velocity v1, and $P_{b2}$ represents a power level in a center portion of the recording pulse at the linear velocity v2.

In the case of the configuration corresponding to Embodiment 1, the power level $P_b$ is set so as to satisfy the following Conditional Formula (8) with respect to the power level ratios $\alpha1$, $\alpha2$

$$(\alpha2/\alpha1) < ((T_{L2}/T_{w2})/(T_{L1}/T_{w1})) \tag{8}.$$

In the case of the configuration corresponding to Embodiment 2, the power level $P_b$ is set so as to satisfy the following Conditional Formula (9)

$$(\alpha 2/\alpha 1) < ((T_{S1}/T_{w1})/(T_{S2}/T_{w2})) \tag{9}.$$

This suppresses the mark distortion in which a mark center portion becomes wide in the same way as in the case of a multi-pulse.

In the above embodiment, one of the trailing pulse width and the leading pulse width is varied with respect to the linear velocity. However, it is more preferable that both the pulse widths are varied simultaneously as described above. In this case, there is an advantage that data can be recorded with satisfactory signal quality in a wide range of a linear velocity.

Furthermore, in each of the above-mentioned embodiments, the optimum values of the leading pulse width or the trailing pulse width at the linear velocities v1 and v2 may be determined from test recording. In this case, there is an advantage that the best pulse width can be determined in accordance with the kind of a medium and the state of an apparatus.

Alternatively, if the leading pulse width or the trailing pulse width at the linear velocities v1 and v2 is recorded on a control track (i.e., region where information on a recording medium is recorded) of the recording medium, immediately after the recording medium is inserted in the optical information recording apparatus, the pulse width in accordance with the linear velocity can be determined. The information on the power level may be recorded on a medium by the optical information recording apparatus or may be recorded previously in the course of production of a medium.

Furthermore, in each of the above-mentioned embodiments, the power level of a laser light-emission wave is varied between two levels $P_w$ and $P_e$. However, the power level may be varied among at least three levels. For example, the power level (also referred to as a bottom level) between respective recording pulses may be set to be higher than $P_e$ or lower than $P_e$. Herein, the power level between the recording pulses is set so as to increase in accordance with the increase in a linear velocity, which is preferable in that the cooling speed does not become excessive during recording at a high linear speed, and insufficient erasure during overwriting is eliminated.

Furthermore, in each of the above-mentioned embodiments, the effects similar to those as described above can be obtained even in a recording pulse train with a cooling pulse applied thereto after a recording pulse or a recording pulse train.

The modulation system of a recording pulse, the length, position, and the like of each pulse are not limited to those described in the embodiments, and may be set appropriately in accordance with recording conditions and a medium. Furthermore, in order to avoid the influence of thermal interference between marks, the edge portion of a recording pulse also can be corrected.

Furthermore, the above method is applicable to any medium such as an optical disk made of a phase-change material, a magnetooptical material, a coloring material, or the like, as long as optical characteristics are varied between a mark and a space.

Furthermore, the same effects as those described above can be obtained even when the optical information recording method, the optical information recording apparatus, and the optical information recording medium of the present invention are applied to a personal computer, a server, a recorder, and the like.

**Claims**

1. An optical information recording method, comprising:

   forming a recording pulse for driving a laser so that a length of a mark or a space to be recorded on an optical information recording medium corresponds to a recording code length of data;
   forming the recording pulse as a recording pulse train having respective pulse heights corresponding to a plurality of power levels including a recording power $P_w$ and an erasure power $P_e$;
   composing the recording pulse train of a plurality of pulses including a multi-pulse and a trailing pulse with respect to at least one kind of the recording code length; and
   irradiating the optical information recording medium at a plurality kinds of linear velocities with laser light based on the recording pulse to vary optical characteristics of a photosensitive recording film, thereby forming the mark or the space,

   wherein when two kinds of linear velocities v1 and v2 among the plurality of kinds of linear velocities are in a relationship represented by v1 < v2, the following formulas are satisfied:

$(T_{L1}/T_{w1}) < (T_{L2}/T_{w2})$, and $((T_{M2}/T_{w2})/(T_{M1}/T_{w1})) < ((T_{L2}/T_{w2})/(T_{L1}/T_{w1}))$, where
$T_{w1}$, $T_{w2}$ : respective channel clock periods at the linear velocities v1, v2
$T_{L1}$, $T_{L2}$ : respective trailing pulse widths at the linear velocities v1, v2
$T_{M1}$, $T_{M2}$ : respective multi-pulse widths at the linear velocities v1, v2.

2. The optical information recording method according to claim 1, wherein $T_{L1} = T_{M1}$.

3. An optical information recording method, comprising:

forming a recording pulse for driving a laser so that a length of a mark or a space to be recorded on an optical information recording medium corresponds to a recording code length of data;
forming the recording pulse so as to have respective pulse heights corresponding to a plurality of power levels including a recording power $P_w$ and an erasure power $P_e$;
setting a power level $P_w$ of a back portion of the recording pulse to be different from a power level $P_b$ in a center portion of the recording pulse, thereby forming a trailing pulse with respect to at least one recording code length; and
irradiating the optical information recording medium at a plurality kinds of linear velocities with laser light based on the recording pulse to vary optical characteristics of a photosensitive recording film, thereby forming the mark or the space,

wherein when two kinds of linear velocities v1 and v2 among the plurality of kinds of linear velocities are in a relationship represented by v1 < v2, the following formulas are satisfied:

$(T_{L1}/T_{w1}) < (T_{L2}/T_{w2})$, and $(\alpha2/\alpha1) < ((T_{L2}/T_{w2})/(T_{L1}/T_{w1}))$, where
$T_{w1}$, $T_{w2}$ : respective channel clock periods at the linear velocities v1, v2
$T_{L1}$, $T_{L2}$ : respective trailing pulse widths at the linear velocities v1, v2
v1: a power level ratio $\alpha1$ at the linear velocity v1, $\alpha1 = (P_w - P_{b1})/(P_w - P_e)$
v2: a power level ratio $\alpha2$ at the linear velocity v2, $\alpha2 = (P_w - P_{b2})/(P_w - P_e)$
$P_{b1}$: a power level in a center portion of the recording pulse at the linear velocity v1
$P_{b2}$: a power level in a center portion of the recording pulse at the linear velocity v2.

4. The optical information recording method according to claim 1 or 3, wherein, when a channel clock period is T, and a trailing pulse width is $T_L$ at a linear velocity v between the linear velocity v1 and the linear velocity v2, the trailing pulse width $T_L$ is controlled so as to increase a value $(T_L/T)$ in accordance with an increase in the linear velocity v.

5. An optical information recording method, comprising:

forming a recording pulse for driving a laser so that a length of a mark or a space to be recorded on an optical information recording medium corresponds to a recording code length of data;
forming the recording pulse as a recording pulse train having respective pulse heights corresponding to a plurality of power levels including a recording power $P_w$ and an erasure power $P_e$;
composing the recording pulse train of a plurality of pulses including a leading pulse with respect to at least one kind of the recording code length; and
irradiating the optical information recording medium at a plurality kinds of linear velocities with laser light based on the recording pulse to vary optical characteristics of a photosensitive recording film, thereby forming the mark or the space,

wherein when two kinds of linear velocities v1 and v2 among the plurality of kinds of linear velocities are in a relationship represented by v1 < v2, the following formulas is satisfied:

$(T_{S1}/T_{w1}) > (T_{S2}/T_{w2})$, where
$T_{w1}$, $T_{w2}$ : respective channel clock periods at the linear velocities v1, v2
$T_{S1}$, $T_{S2}$ : respective leading pulse widths at the linear velocities v1, v2.

6. The optical information recording method according to claim 5,

wherein the recording pulse train includes a multi-pulse continuing to the leading pulse, and
when multi-pulse widths at the linear velocities v1, v2 respectively are $T_{M1}$, $T_{M2}$, the following formula is satisfied

$$((T_{M1}/T_{w1})/(T_{M2}/T_{w2})) < ((T_{S1}/T_{w1})/(T_{S2}/T_{w2})).$$

7. An optical information recording method, comprising:

forming a recording pulse for driving a laser so that a length of a mark or a space to be recorded on an optical information recording medium corresponds to a recording code length of data;
forming the recording pulse so as to have respective pulse heights corresponding to a plurality of power levels including a recording power $P_w$ and an erasure power $P_e$;
setting a power level $P_w$ of a front portion of the recording pulse to be different from a power level $P_b$ in a center portion of the recording pulse, thereby forming a leading pulse with respect to at least one recording code length; and
irradiating the optical information recording medium at a plurality kinds of linear velocities with laser light based on the recording pulse to vary optical characteristics of a photosensitive recording film, thereby forming the mark or the sp ace,

wherein when two kinds of linear velocities v1 and v2 among the plurality of kinds of linear velocities are in a relationship represented by v1 < v2, the following formula is satisfied:

$(T_{S1}/T_{w1}) > (T_{S2}/T_{w2})$, where
$T_{w1}$, $T_{w2}$ : respective channel clock periods at the linear velocities v1, v2
$T_{S1}$, $T_{S2}$ : respective leading pulse widths at the linear velocities v1, v2.

8. The optical information recording method according to claim 7, wherein the following formula is satisfied:

$(\alpha 2/\alpha 1) < ((T_{S1}/T_{w1})/(T_{S2}/T_{w2}))$, where
v1: a power level ratio $\alpha 1$ at the linear velocity v1, $\alpha 1 = (P_w - P_{b1})/(P_w - P_e)$
v2: a power level ratio $\alpha 2$ at the linear velocity v2, $\alpha 2 = (P_w - P_{b2})/(P_w - P_e)$
$P_{b1}$: a power level in a center portion of the recording pulse at the linear velocity v1
$P_{b2}$: a power level in a center portion of the recording pulse at the linear velocity v2.

9. The optical information recording method according to any one of claims 5 to 8, wherein, when trailing pulse widths at the linear velocities v1, v2 respectively are $T_{L1}$, $T_{L2}$, the following formula is satisfied

$$(T_{L1}/T_{w1}) < (T_{L2}/T_{w2}).$$

10. The optical information recording method according to any one of claims 5 to 8, wherein, when a channel clock period is T, and a leading pulse width is Ts at a linear velocity v between the linear velocity v1 and the linear velocity v2, the leading pulse width Ts is controlled so as to decrease (Ts/T) in accordance with an increase in the linear velocity v

11. The optical information recording method according to claim 4 or 10, wherein data is recorded on an optical information recording medium by a CAV recording system.

12. The optical information recording method according to any one of claims 1, 3, 5, and 7, wherein a power level between the recording pulses is set to be different from the erasure power $P_e$.

13. The optical information recording method according to claim 12, wherein a power level between the recording pulses at the linear velocity v2 is set to be higher than a power level between the recording pulses at the linear velocity v1.

14. An optical information recording apparatus, comprising:

a linear velocity setting circuit for setting a plurality of different kinds of linear velocities in recording on an optical information recording medium;
a recording pulse generation circuit for generating a recording pulse in accordance with a setting result of the linear velocity setting circuit; and
a laser driving circuit for radiating laser light based on the recording pulse,

wherein the recording pulse generation circuit forms a recording pulse for driving a laser so that a length of a mark or a space to be recorded on an optical information recording medium corresponds to a recording code length of data,

forms the recording pulse as a recording pulse train having respective pulse heights corresponding to a plurality of power levels including a recording power $P_w$ and an erasure power $P_e$, and
composes the recording pulse train of a plurality of pulses including a multi-pulse and a trailing pulse with respect to at least one kind of the recording code length, and

wherein when two kinds of linear velocities v1 and v2 among the plurality of kinds of linear velocities are in a relationship represented by v1 < v2, the recording pulse generation circuit controls the trailing pulse widths so as to satisfy the following formulas:

$(T_{L1}/T_{w1}) < (T_{L2}/T_{w2})$ and $((T_{M2}/T_{w2})/(T_{M1}/T_{w1})) < ((T_{L2}/T_{w2})/(T_{L1}/T_{w1}))$, where
$T_{w1}$, $T_{w2}$ : respective channel clock periods at the linear velocities v1, v2
$T_{L1}$, $T_{L2}$ : respective trailing pulse widths at the linear velocities v1, v2
$T_{M1}$, $T_{M2}$ : respective multi-pulse widths at the linear velocities v1, v2.

15. The optical information recording apparatus according to claim 14, wherein the recording pulse generation circuit controls the trailing pulse widths so as to satisfy $T_{L1} = T_{M1}$.

16. An optical information recording apparatus, comprising

a linear velocity setting circuit for setting a plurality of different kinds of linear velocities in recording on an optical information recording medium;
a recording pulse generation circuit for generating a recording pulse in accordance with a setting result of the linear velocity setting circuit; and
a laser driving circuit for radiating laser light based on the recording pulse,

wherein the recording pulse generation circuit forms a recording pulse for driving a laser so that a length of a mark or a space to be recorded on an optical information recording medium corresponds to a recording code length of data,

forms the recording pulse so as to have respective pulse heights corresponding to a plurality of power levels including a recording power $P_w$ and an erasure power $P_e$; and
sets a power level $P_w$ of a back portion of the recording pulse to be different from a power level $P_b$ in a center portion of the recording pulse, thereby forming a trailing pulse with respect to at least one recording code length, and

wherein when two kinds of linear velocities v1 and v2 among the plurality of kinds of linear velocities are in a relationship represented by v1 < v2, the recording pulse generation circuit controls the trailing pulse widths so as to satisfy the following formulas:

$(T_{L1}/T_{w1}) < (T_{L2}/T_{w2})$, and $(\alpha2/\alpha1) < ((T_{L2}/T_{w2})/(T_{L1}/T_{w1}))$, where
$T_{w1}$, $T_{w2}$ : respective channel clock periods at the linear velocities v1, v2
$T_{L1}$, $T_{L2}$ : respective trailing pulse widths at the linear velocities v1, v2
v1: a power level ratio $\alpha1$ at the linear velocity v1, $\alpha1 = (P_w - P_{b1})/(P_w - P_e)$
v2: a power level ratio $\alpha2$ at the linear velocity v2, $\alpha2 = (P_w - P_{b2})/(P_w - P_e)$
$P_{b1}$: a power level in a center portion of the recording pulse at the linear velocity v1
$P_{b2}$: a power level in a center portion of the recording pulse at the linear velocity v2.

17. The optical information recording apparatus according to claim 14 or 16, wherein, when the channel clock period is T, and the trailing pulse width is $T_L$ at a linear velocity v between the linear velocity v1 and the linear velocity v2, the recording pulse generation circuit controls the trailing pulse widths so as to increase $(T_L/T)$ in accordance with an increase in the linear velocity v.

**18.** An optical information recording apparatus, comprising:

a linear velocity setting circuit for setting a plurality of different kinds of linear velocities in recording on an optical information recording medium;
a recording pulse generation circuit for generating a recording pulse in accordance with a setting result of the linear velocity setting circuit; and
a laser driving circuit for radiating laser light based on the recording pulse,

wherein the recording pulse generation circuit forms a recording pulse for driving a laser so that a length of a mark or a space to be recorded on an optical information recording medium corresponds to a recording code length of data,

forms the recording pulse as a recording pulse train having respective pulse heights corresponding to a plurality of power levels including a recording power $P_w$ and an erasure power $P_e$, and
composes the recording pulse train of a plurality of pulses including a leading pulse with respect to at least one kind of the recording code length, and

wherein when two kinds of linear velocities v1 and v2 among the plurality of kinds of linear velocities are in a relationship represented by v1 < v2, the recording pulse generation circuit controls the leading pulse widths so as to satisfy the following formula:

$(T_{S1}/T_{w1}) > (T_{S2}/T_{w2})$, where
$T_{w1}$, $T_{w2}$ : respective channel clock periods at the linear velocities v1, v2
$T_{S1}$, $T_{S2}$ : respective leading pulse widths at the linear velocities v1, v2.

**19.** The optical information recording apparatus according to claim 18,
wherein the recording pulse train includes a multi-pulse continuing to the leading pulse, and
when multi-pulse widths at the linear velocities v1, v2 respectively are $T_{M1}$, $T_{M2}$, the recording pulse generation circuit controls the leading pulse widths so as to satisfy the following formula

$$((T_{M1}/T_{w1})/(T_{M2}/T_{w2})) < (T_{S1}/T_{w1})/(T_{S2}/T_{w2})).$$

**20.** An optical information recording apparatus, comprising:

a linear velocity setting circuit for setting a plurality of different kinds of linear velocities in recording on an optical information recording medium;
a recording pulse generation circuit for generating a recording pulse in accordance with a setting result of the linear velocity setting circuit; and
a laser driving circuit for radiating laser light based on the recording pulse,

wherein the recording pulse generation circuit forms a recording pulse for driving a laser so that a length of a mark or a space to be recorded on an optical information recording medium corresponds to a recording code length of data,

forms the recording pulse so as to have respective pulse heights corresponding to a plurality of power levels including a recording power $P_w$ and an erasure power $P_e$, and
sets a power level $P_w$ of a front portion of the recording pulse to be different from a power level $P_b$ in a center portion of the recording pulse, thereby forming a leading pulse with respect to at least one recording code length; and

wherein when two kinds of linear velocities v1 and v2 among the plurality of kinds of linear velocities are in a relationship represented by v1 < v2, the recording pulse generation circuit controls the leading pulse widths so as to satisfy the following formulas:

$(T_{S1}/T_{w1}) > (T_{S2}/T_{w2})$, where

$T_{w1}$, $T_{w2}$ : respective channel clock periods at the linear velocities v1, v2

$T_{S1}$, $T_{S2}$ : respective leading pulse widths at the linear velocities v1, v2.

**21.** The optical information recording apparatus according to claim 20, wherein the following formula is satisfied:

$(\alpha2/\alpha1) < ((T_{S1}/T_{w1})/(T_{S2}/T_{w2}))$, where

v1: a power level ratio $\alpha1$ at the linear velocity v1, $\alpha1 = (P_w - P_{b1})/(P_w - P_e)$

v2: a power level ratio $\alpha2$ at the linear velocity v2, $\alpha2 = (P_w - P_{b2})/(P_w - P_e)$

$P_{b1}$: a power level in a center portion of the recording pulse at the linear velocity v1

$P_{b2}$: a power level in a center portion of the recording pulse at the linear velocity v2.

**22.** The optical information recording apparatus according to any one of claims 18 to 21, wherein, when trailing pulse widths at the linear velocities v1, v2 respectively are $T_{L1}$, $T_{L2}$, the recording pulse generation circuit controls the trailing pulse widths so as to satisfy the following formula

$$(T_{L1}/T_{w1}) < (T_{L2}/T_{w2}).$$

**23.** The optical information recording apparatus according to any one of claims 18 to 21, wherein, when a channel clock period is T, and a leading pulse width is Ts at a linear velocity v between the linear velocity v1 and the linear velocity v2, the recording pulse generation circuit controls the leading pulse width Ts so as to decrease $(T_S/T)$ in accordance with an increase in the linear velocity v.

**24.** An optical information recording medium used for recording data by an optical information recording/reproducing method,

the optical information recording medium being provided with information representing values of $T_{L1}$ and $T_{L2}$ as defined in the following, and

the method comprising:

forming a recording pulse for driving a laser so that a length of a mark or a space to be recorded on the optical information recording medium corresponds to a recording code length of data;

forming the recording pulse as a recording pulse train having respective pulse heights corresponding to a plurality of power levels including a recording power $P_w$ and an erasure power $P_e$;

composing the recording pulse train of a plurality of pulses including a multi-pulse and a trailing pulse with respect to at least one kind of the recording code length; and

irradiating the optical information recording medium at a plurality kinds of linear velocities with laser light based on the recording pulse to vary optical characteristics of a photosensitive recording film, thereby forming the mark or the space,

wherein when two kinds of linear velocities v1 and v2 among the plurality of kinds of linear velocities are in a relationship represented by v1 < v2, the following formulas are satisfied:

$(T_{L1}/T_{w1}) < (T_{L2}/T_{w2})$ and $((T_{M2}/T_{w2})/(T_{M1}/T_{w1})) < ((T_{L2}/T_{w2})/(T_{L1}/T_{w1}))$, where

$T_{w1}$, $T_{w2}$ : respective channel clock periods at the linear velocities v1, v2

$T_{L1}$, $T_{L2}$ : respective trailing pulse widths at the linear velocities v1, v2

$T_{M1}$, $T_{M2}$ : respective multi-pulse widths at the linear velocities v1, v2.

**25.** An optical information recording medium used for recording data by an optical information recording/reproducing method,

the optical information recording medium being provided with information representing values of $T_{L1}$ and $T_{L2}$ as defined in the following, and

the method comprising:

forming a recording pulse for driving a laser so that a length of a mark or a space to be recorded on the optical information recording medium corresponds to a recording code length of data;

setting a power level $P_w$ of a back portion of the recording pulse to be different from a power level $P_b$ in a center portion of the recording pulse, thereby forming a trailing pulse with respect to at least one recording code length; and

irradiating the optical information recording medium at a plurality kinds of linear velocities with laser light based on the recording pulse to vary optical characteristics of a photosensitive recording film, thereby forming the mark or the space,

wherein when two kinds of linear velocities v1 and v2 among the plurality of kinds of linear velocities are in a relationship represented by v1 < v2, the following formulas are satisfied:

$(T_{L1}/T_{w1}) < (T_{L2}/T_{w2})$, and $(\alpha2/\alpha1) < ((T_{L2}/T_{w2})/(T_{L1}/T_{w1}))$, where
$T_{w1}, T_{w2}$ : respective channel clock periods at the linear velocities v1, v2
$T_{L1}, T_{L2}$ : respective trailing pulse widths at the linear velocities v1, v2
v1: a power level ratio $\alpha1$ at the linear velocity v1, $\alpha1 = (P_w - P_{b1})/(P_w - P_e)$
v2: a power level ratio $\alpha2$ at the linear velocity v2, $\alpha2 = (P_w - P_{b2})/(P_w - P_e)$
$P_{b1}$: a power level in a center portion of the recording pulse at the linear velocity v1
$P_{b2}$: a power level in a center portion of the recording pulse at the linear velocity v2.

**26.** The optical information recording medium according to claim 24 or 25, used for recording data by the optical information recording/reproducing method,

wherein, when a channel clock period is T, and a trailing pulse width is $T_L$ at a linear velocity v between the linear velocity v1 and the linear velocity v2, the trailing pulse width $T_L$ is controlled so as to increase $(T_L/T)$ in accordance with an increase in the linear velocity v, and

the optical information recording medium is provided with information determining $T_L$.

**27.** An optical information recording medium used for recording data by an optical information recording/reproducing method,

the optical information recording medium being provided with information representing values of $T_{S1}$ and $T_{S2}$ as defined in the following, and

the method comprising:

forming a recording pulse for driving a laser so that a length of a mark or a space to be recorded on the optical information recording medium corresponds to a recording code length of data;

forming the recording pulse as a recording pulse train having respective pulse heights corresponding to a plurality of power levels including a recording power $P_w$ and an erasure power $P_e$;

composing the recording pulse train of a plurality of pulses including a leading pulse with respect to at least one kind of the recording code length; and

irradiating the optical information recording medium at a plurality kinds of linear velocities with laser light based on the recording pulse to vary optical characteristics of a photosensitive recording film, thereby forming the mark or the space,

wherein when two kinds of linear velocities v1 and v2 among the plurality of kinds of linear velocities are in a relationship represented by v1 < v2, the following formula is satisfied:

$(T_{S1}/T_{w1}) > (T_{S2}/T_{w2})$, where
$T_{w1}, T_{w2}$ : respective channel clock periods at the linear velocities v1, v2
$T_{S1}, T_{S2}$ : respective leading pulse widths at the linear velocities v1, v2.

**28.** An optical information recording medium used for recording data by an optical information recording/reproducing method,

the optical information recording medium being provided with information representing values of $T_{S1}$ and $T_{S2}$ as defined in the following, and

the method comprising:

forming a recording pulse for driving a laser so that a length of a mark or a space to be recorded on the optical information recording medium corresponds to a recording code length of data;

forming the recording pulse so as to have respective pulse heights corresponding to a plurality of power levels including a recording power $P_w$ and an erasure power $P_e$;

setting a power level $P_w$ of a front portion of the recording pulse to be different from a power level $P_b$ in a center portion of the recording pulse, thereby forming a leading pulse with respect to at least one recording code length; and

irradiating the optical information recording medium at a plurality kinds of linear velocities with laser light based on the recording pulse to vary optical characteristics of a photosensitive recording film, thereby forming the mark or the space,

wherein when two kinds of linear velocities v1 and v2 among the plurality of kinds of linear velocities are in a relationship represented by v1 < v2, the following formula is satisfied:

$(T_{S1}/T_{w1}) > (T_{S2}/T_{w2})$, where

$T_{w1}$, $T_{w2}$ : respective channel clock periods at the linear velocities v1, v2

$T_{S1}$, $T_{S2}$ : respective leading pulse widths at the linear velocities v1, v2.

29. The optical information recording medium according to claim 27 or 28, used for recording data by the optical information recording/reproducing method,

wherein, when trailing pulse widths at the linear velocities v1, v2 respectively are $T_{L1}$, $T_{L2}$, $(T_{L1}/T_{w1}) < (T_{L2}/T_{w2})$ is satisfied, and

the optical information recording medium is provided with information representing values of $T_{L1}$ and $T_{L2}$.

30. The optical information recording medium according to claim 27 or 28 used for recording data by the optical information recording/reproducing method,

wherein, when a channel clock period is T, and a leading pulse width is $T_S$ at a linear velocity v between the linear velocity v1 and the linear velocity v2, the leading pulse width $T_S$ is controlled so as to decrease $(T_S/T)$ in accordance with an increase in the linear velocity, and

the optical information recording medium is provided with information determining Ts.

FIG. 1

- Optical head (7)
- Laser driving circuit (6)
- Recording pulse correction circuit (5)
- Recording pulse generation circuit (4)
- Modulation circuit (3)
- System control circuit (2)
- Reproduced signal processing circuit (10)
- Demodulation circuit (11)
- Lear velocity setting circuit (8)
- Spindle motor (9)

Reference numerals: 1, 15, 12, 13, 14, 16

```
        ┌──────────────┐
        │    Start     │
        └──────────────┘
                │
                ▼
        ┌──────────────┐
        │Linear velocity│────S201
        │   setting    │
        └──────────────┘
                │
                ▼
        ┌──────────────┐
        │Seek operation│────S202
        └──────────────┘
                │
                ▼
        ┌──────────────┐
        │    Power     │────S203
        │ determination│
        └──────────────┘
                │
                ▼
        ┌──────────────┐
        │  Modulation  │────S204
        └──────────────┘
                │
                ▼
        ┌──────────────┐
        │Recording pulse│───S205
        │signal generation│
        └──────────────┘
                │
                ▼
        ┌──────────────┐
        │Trailing pulse│────S206
        │width correction│
        └──────────────┘
                │
                ▼
        ┌──────────────┐
        │Laser driving │────S207
        └──────────────┘
                │
                ▼
        ┌──────────────┐
        │  Recording   │────S208
        └──────────────┘
                │
                ▼
        ┌──────────────┐
        │     End      │
        └──────────────┘
```

FIG. 2

(a) Channel clock
    signal

$T_{w1}$

H
L

(b) Modulation
    signal 12

H
L

(c) Recording pulse
    signal 13

301    302    303

H
L

(d) Corrected
    recording pulse
    signal 14

H
L

(e) Light-emission
    waveform of
    laser light 15

$P_w$
$P_e$

$T_{M1}$    $T_{L1}$

0                                    Time

(f) Recorded pattern

305                    304

**FIG. 3**

(a) Light-emission
    waveform of
    laser light 15

$T_{La}$

$P_w$
$P_e$

0                                    Time

(b) Recorded pattern

$W_{Ta}$        $W_{La}$

401    402    304

**FIG. 4**

(a) Light-emission waveform of laser light 15

$P_w$
$P_e$
$T_{Lb}$
0
Time

(b) Recorded pattern

$W_{Tb}$
$W_{Lb}$

501      502      304

## FIG. 5

$T_{w2}$

(a) Channel clock signal

H
L

(b) Modulation signal 12

H
L

601   602   603

(c) Recording pulse signal 13

H
L

(d) Corrected recording pulse signal 14

H
L

$\Delta T_{L2}$

(e) Light-emission waveform of laser light 15

$T_{L2}$

$P_w$
$P_e$
0
Time

(f) Recorded pattern

604      304

## FIG. 6

24

Start

Linear velocity
setting                    S201

Seek operation           S202

Power
determination            S203

Modulation               S204

Recording pulse
signal generation        S205

Leading pulse
width correction         S701

Laser driving            S207

Recording                S208

End

FIG. 7

FIG. 8

(a) Channel clock signal

(b) Modulation signal 12

(c) Recording pulse signal 13

(d) Corrected recording pulse signal 14

(e) Light-emission waveform of laser light 15

(f) Recorded pattern

FIG. 9

(a) Light-emission waveform of laser light 15

(b) Recorded pattern

$T_{sc}$

$P_W$

$P_e$

0           Time

$W_{Tc}$      $W_{Lc}$

1001      1002      304

FIG. 10

(a) Light-emission waveform of laser light 15

(b) Recorded pattern

$T_{sd}$

$P_W$

$P_e$

0           Time

$W_{Td}$      $W_{Ld}$

1101      1102      304

FIG. 11

FIG. 12

Ratio of a trailing
pulse width with
respect to a channel
clock period

FIG. 13

FIG. 14

(a)　Channel clock
　　　signal

(b)　Modulation
　　　signal 12

(c)　Recording pulse
　　　signal 13

(d)　Corrected
　　　recording pulse
　　　signal 14

(e)　Light-emission
　　　waveform of
　　　laser light 15

FIG. 15